(19)

Europäisches
Patentamt
European
Patent Office
Office européen
des brevets

(11) **EP 4 395 153 A1**

(12) **EUROPEAN PATENT APPLICATION**

(43) Date of publication:
**03.07.2024 Bulletin 2024/27**

(51) International Patent Classification (IPC):
**H02M 7/487** (2007.01)   **H02M 7/5395** (2006.01)
**H02M 7/5387** (2007.01)   **H02M 1/00** (2006.01)
**H02P 27/14** (2006.01)

(21) Application number: **23212277.0**

(22) Date of filing: **27.11.2023**

(52) Cooperative Patent Classification (CPC):
**H02M 7/487; H02M 1/0003; H02M 7/53873;
H02M 7/5395; H02P 27/14**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **19.12.2022 IN 202211073638**

(71) Applicant: **Hamilton Sundstrand Corporation
Charlotte, NC 28217-4578 (US)**

(72) Inventors:
• **MAIRAL, Palash**
  **482002 Jabalpur, Madhya Pradesh (IN)**
• **SENGODAN, Rajkumar**
  **560048 Bangalore, Karnataka (IN)**

(74) Representative: **Dehns
St. Bride's House
10 Salisbury Square
London EC4Y 8JD (GB)**

(54) **SPACE VECTOR PULSE WIDTH MODULATION CONTROL OF THREEPHASE MULTI-LEVEL INVERTERS**

(57) An inverter system (100) includes an inverter having a plurality of switching elements (108) arranged with at least three levels, where the inverter is configured to receive a direct current input and output an alternating current to three phases. The inverter system (100) also includes a controller (130) configured to determine a reference voltage angle based on a first voltage and a second voltage that are orthogonal components of a reference voltage and determine a sector of a space vector map of the reference voltage based on the reference voltage angle. The controller (130) is also configured to determine an active time pair of vector states associated with on-off states of the switching elements (108) to modulate between based on the sector and the reference voltage angle and output a carrier waveform for each of the three phases to control modulation of the switching elements (108) to achieve the reference voltage for the three phases.

FIG. 1

**Description**

CROSS-REFERENCE TO RELATED APPLICATIONS

This application claims the benefit of IN Application No. 202211073638 filed December 19, 2022.

BACKGROUND

The present disclosure relates to electric control systems, and more particularly, to space vector pulse width modulation (PWM) control of three-phase, multi-level inverters.

In a typical two-level inverter for generating a three phase alternating current (AC) output from a direct current (DC) input, there are six active vectors to consider when using space vector PWM to control switching elements, such as field effect transistors. The switching elements can be arranged in three pairs, with one pair per phase distributed between a high side and a low side. Where additional levels are added to the inverter, the number of active vectors to consider in a state space design increase. For example, a 3-level inverter has 24 active vectors, a 4-level inverter has 36 active vectors, and so on. This increases complexity and makes implementation of a space vector PWM difficult due to the large number of computations needed with higher-level inverter designs. Other control techniques may use additional transforms and computations that also add to complexity and may increase total harmonic distortion.

BRIEF DESCRIPTION

According to some embodiments of the present disclosure, an inverter system includes an inverter having a plurality of switching elements arranged with at least three levels, where the inverter is configured to receive a direct current input and output an alternating current to three phases. The inverter system also includes a controller configured to determine a reference voltage angle based on a first voltage and a second voltage that are orthogonal components of a reference voltage and determine a sector of a space vector map of the reference voltage based on the reference voltage angle. The controller is also configured to determine an active time pair of vector states associated with on-off states of the switching elements to modulate between based on the sector and the reference voltage angle and output a carrier waveform for each of the three phases to control modulation of the switching elements to achieve the reference voltage for the three phases.

In addition to one or more of the features described herein, or as an alternative, further embodiments can include where the inverter is a three-phase multi-level neutral point clamped inverter.

In addition to one or more of the features described herein, or as an alternative, further embodiments can include where the controller is configured to determine an offset voltage based on the sector, the active time pair, and the reference voltage.

In addition to one or more of the features described herein, or as an alternative, further embodiments can include where the controller is configured to add the voltage offset to the carrier waveform for each of the three phases.

In addition to one or more of the features described herein, or as an alternative, further embodiments can include where the switching elements include a first pair of switching elements on a high side of each of the three phases and a second pair of switching elements on a low side of each of the three phases.

In addition to one or more of the features described herein, or as an alternative, further embodiments can include where the switching elements are distributed to produce four or more levels of three phases, and the vector states of the active time pair are separated by 60 degrees with respect to a reference frame defined by the first voltage and the second voltage.

In addition to one or more of the features described herein, or as an alternative, further embodiments can include where a sampling period to generate the reference voltage includes a combined time of the active time pair and one or more time portions of null states.

In addition to one or more of the features described herein, or as an alternative, further embodiments can include where a modulation index of the inverter is adjustable to modify total harmonic distortion with overmodulation.

In addition to one or more of the features described herein, or as an alternative, further embodiments can include where modulation of the switching elements controls commutation of a motor.

In addition to one or more of the features described herein, or as an alternative, further embodiments can include where the first voltage and the second voltage are inverse Park transform voltages to control the motor.

According to an aspect, a method of inverter control includes determining a reference voltage angle based on a first voltage and a second voltage that are orthogonal components of a reference voltage and determining a sector of a space vector map of the reference voltage based on the reference voltage angle. The method also includes determining an active time pair of vector states associated with on-off states of a plurality of switching elements of an inverter to modulate between based on the sector and the reference voltage angle, where the switching elements are arranged with at least three levels, and the inverter is configured to receive a direct current input and output an alternating current to three phases. The method further includes outputting a carrier waveform for each of the three phases to control modulation of the switching elements to achieve the reference voltage for the three phases.

In addition to one or more of the features described herein, or as an alternative, further embodiments can include determining an offset voltage based on the sector, the active time pair, and the reference voltage.

In addition to one or more of the features described herein, or as an alternative, further embodiments can include adding the voltage offset to the carrier waveform for each of the three phases.

The foregoing features and elements may be combined in various combinations without exclusivity, unless expressly indicated otherwise. Features which are described in the context of separate aspects and embodiments may be used together and/or be interchangeable. Similarly, features described in the context of a single embodiment may also be provided separately or in any suitable subcombination. These features and elements as well as the operation thereof will become more apparent in light of the following description and the accompanying drawings. It should be understood, however, that the following description and drawings are intended to be illustrative and explanatory in nature and non-limiting.

BRIEF DESCRIPTION OF THE DRAWINGS

Various features will become apparent to those skilled in the art from the following detailed description of the disclosed non-limiting embodiments. The drawings that accompany the detailed description can be briefly described as follows:

FIG. 1 is a schematic diagram of a three-level, three-phase neutral point clamped inverter according to a non-limiting embodiment of the present disclosure;

FIG. 2 is a space vector map for a three-level, three-phase inverter according to a non-limiting embodiment of the present disclosure;

FIG. 3 is a graphical depiction of reference voltage resolution according to a non-limiting embodiment of the present disclosure;

FIG. 4 is an example of a three-level output voltage according to a non-limiting embodiment of the present disclosure;

FIG. 5 is an example of a four-level output voltage according to a non-limiting embodiment of the present disclosure;

FIG. 6 depicts a process flow according to a non-limiting embodiment of the present disclosure; and

FIG. 7 is a schematic diagram of a motor control system according to a non-limiting embodiment of the present disclosure.

The foregoing features and elements may be combined in various combinations without exclusivity, unless expressly indicated otherwise. These features and elements as well as the operation thereof will become more apparent in light of the following description and the accompanying drawings. It should be understood, however, that the following description and drawings are intended to be illustrative and explanatory in nature and non-limiting.

DETAILED DESCRIPTION

Various non-limiting embodiments of the present disclosure provide space vector pulse width modulation (PWM) control of a multi-level three phase inverter. The inverter can convert direct current (DC) input to a three phase alternating current (AC) output that can drive an electrical load, such as a motor. Control of higher complexity inverter designs above a two-level design can become complex due to the number of switching elements and potential for voltage distortion and current distortion in total harmonic distortion (THD). For example, a two-level inverter design for three phases can include six switching elements, while a three-level inverter design for three phases can include twelve switching elements. As the number of switching elements increases, greater precision output can be generated; however, the computational burden of controlling gate drive signals at a desired frequency can become more challenging. Further, classical control techniques that use a combination of a Clarke and Park transform with an inverse Clarke and Park transform may result in switching patterns that exhibit a greater amount of distortion for carrier signals with a higher modulation index. That is, when carrier signals are used to drive PWM switching outputs to the switching elements, carrier signals computed using the classical approach can exhibit more voltage distortion and current distortion than the space vector PWM control, as further described herein, as a ratio of the amplitude of the modulated waveform increases relative to the amplitude of the carrier waveform. This difference can be greater in cases of overmodulation, where the ratio of the amplitude of the modulated waveform to the amplitude of the carrier waveform exceeds a value of one. The greater efficiency can result in reducing size requirements of downstream components, such as the size and weight of an LC filter after the inverter.

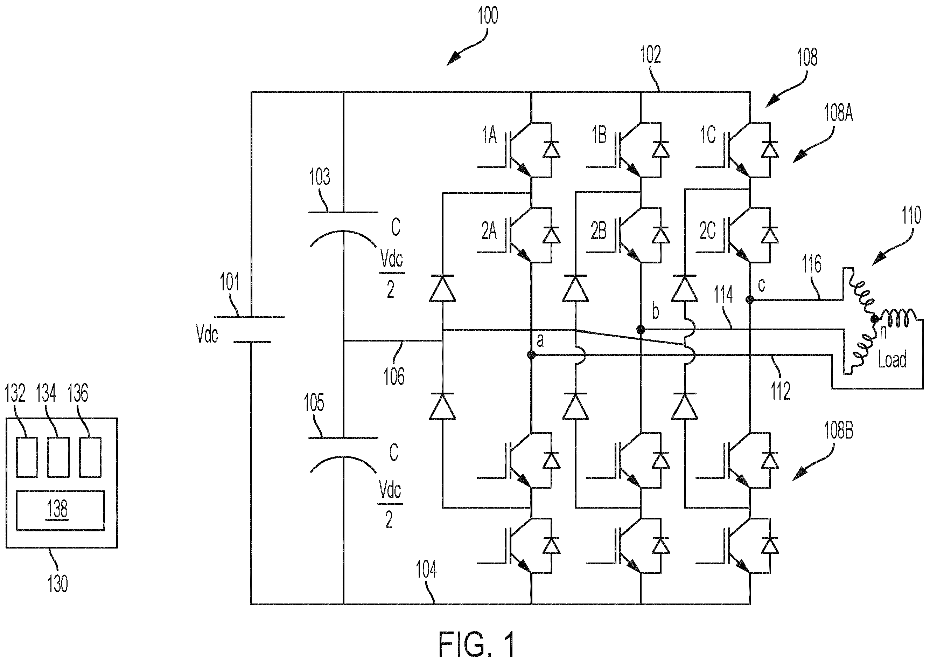

With reference now to FIG. 1, an inverter system 100 is illustrated according to a non-limiting embodiment of the present disclosure. The inverter system 100 includes a positive voltage rail 102, a negative voltage rail 104, and a partitioned direct current (DC) link connected between the positive voltage rail 102 and the negative voltage rail 104. The partitioned DC link includes an upper DC link capacitor 103 connected between the positive voltage rail 102 and a midpoint node 106, and a lower DC link capacitor 105 connected between the negative voltage rail 104 and the midpoint node 106. The midpoint node 106 is coupled across diode pairs to define a neutral point clamp. The positive voltage rail 102 and the negative voltage rail 104 are coupled to a DC power supply 101.

The inverter system 100 also includes plurality of switching elements 108, such as metal-oxide-semiconductor field-effect transistors (MOSFETs) or other transistors such as insulated-gate bipolar transistors (IGBTs). The switching elements 108 are distributed as high-side switching elements 108a and low-side switching elements 108b. The high-side switching elements 108a are arranged in pairs for each of three phases between the positive voltage rail 102 and phase outputs 112, 114, 116 to a three-phase load 110. The low-side switching elements 108b are arranged in pairs for each of three phases between the phase outputs 112, 114, 116 and the negative voltage rail 104. In embodiments, the three-phase load 110 can be an electrical motor or another type of three-phase device.

The switching elements 108 can be controlled by a controller 130 that outputs gate drive signals that result in setting an on-off state for each of the switching elements 108. The controller 130 can include a processing system 132 and a memory system 134, where the memory system 134 stores executable instructions to configure the processing system 132 to perform a plurality of operations. The processing system 132 can include any type or combination of central processing unit (CPU), including one or more of a microprocessor, a digital signal processor (DSP), a microcontroller, an application specific integrated circuit (ASIC), a field programmable gate array (FPGA), or the like. The memory system 134 can store data and instructions that are executed by the processing system 132. In embodiments, the memory system 134 may include random access memory (RAM), read only memory (ROM), or other electronic, optical, magnetic, or any other computer readable medium onto which is stored data and algorithms in a non-transitory form. The controller 130 can also include a communication interface 136 configured to receive commands to drive the three-phase load 110. The controller 130 can also include an input/output (I/O) interface 138 operable to interface with various components of the inverter system 100 and other system components that interface with the inverter system 100, such as sensors and/or gate drives of the switching elements 108.

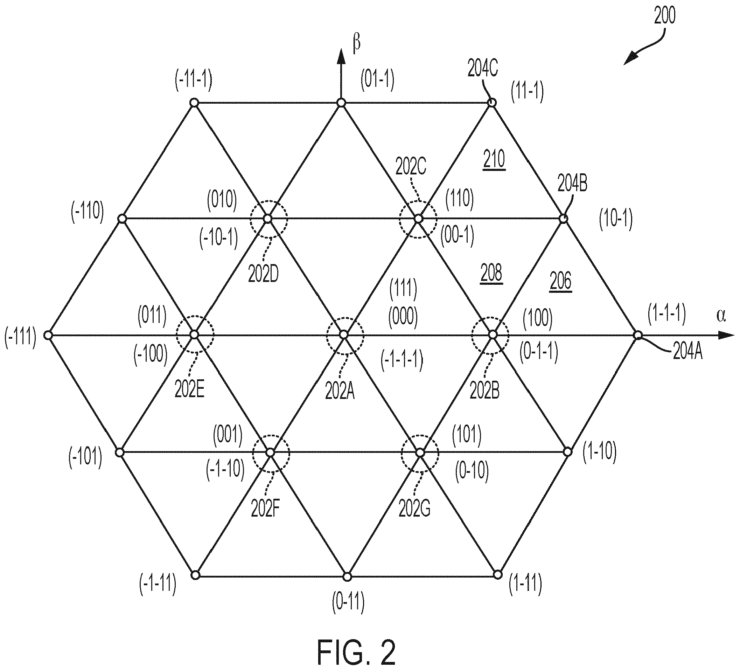

FIG. 2 is a space vector map 200 for a three-level, three-phase inverter according to a non-limiting embodiment. The controller 130 of FIG. 1 can determine switching patterns to drive the switching elements 108 of FIG. 1 using a space vector control. The controller 130 can use the space vector map 200 to determine vector states to switch between in order to achieve a reference voltage that represents a desired voltage vector. In the example of FIG. 2, the space vector map 200 is defined for states of the switching elements 108, where nodes of the space vector map 200 can define on-off states of the switching elements 108. A central node 202A defines an origin or null state which represents one state where current cannot flow from the positive voltage rail 102 and the negative voltage rail 104. A pattern extending from the central node 202A forms a hexagon pattern that includes nodes 202B, 202C, 202C, 202E, and 202F. It can also be seen that a hexagon pattern is formed about each of nodes 202B-202F, forming a larger hexagon pattern as the smaller hexagon patterns overlap each other. A reference frame is formed by axis $\alpha$ and $\beta$ that are orthogonal to each other.

To achieve an output voltage in a particular subsection, such as subsection 206, one approach is to control the switching elements 108 to modulate between the switch states represented by node 204A and node 204B by mixing active times with null state times (e.g., current flowing through switching patterns associated with nodes 204A, 204B, and current not flowing in a modulated pattern with respect to time). Similarly, to achieve an output voltage in subsection 210, one approach is to control the switching elements 108 to modulate between the switch states represented by node 204B and node 204C by mixing active times with null state times. To achieve an output voltage in subsection 208, the modulation may occur with respect to node 202B between nodes 202C and 204B or between nodes 202B and 204B with respect to node 202C. Thus, when viewed as multiple hexagons, the space vector map 200 can result in multiple possible solutions at a highly granular level, and many computations may be needed to consider all possible states in the nodes and subsections.

In embodiments, the space vector PWM control can implement a more efficient approach by utilizing larger vector spans to achieve a desired output voltage. For example, where a reference voltage is desired in subsections 206, 208, or 210, embodiments can control modulation at a 60 degree step, such that modulation occurs between nodes 204A and 204C for angles between 0 and 60 degrees. This simplifies the number of computations needed and allows for scaling to additional levels without increasing complexity as would occur through analyzing each subsection option.

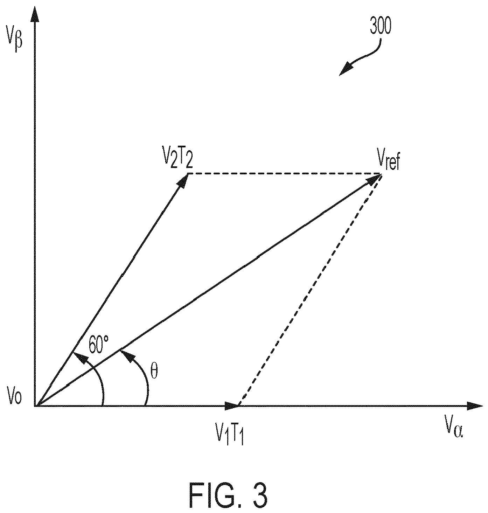

FIG. 3 is a graphical depiction of reference voltage resolution 300 according to a non-limiting embodiment. A reference voltage (Vref) represents a desired output voltage at a reference voltage angle θ relative to orthogonal components of a first voltage Vα and a second voltage Vβ, where Vα and Vβ are orthogonal. With the values of the first and second voltages, the reference voltage angle θ can be determined trigonometrically. To achieve the reference voltage, a closest pair of vector states (V1, V2) that are 60 degrees apart, based on the space vector map 200, can be determined. For example, if the reference voltage angle θ was 50 degrees, then nodes 204A and 204C could be selected. The vector states V1, V2 represent voltage vectors and vector state V0 is a null state with zero voltage. The reference voltage is defined for a sampling time period Ts. The vector state V1 has an active time of T1 and the vector state V2 has an active time T2, where a null state time plus active times T1 and T2 add up to the sampling period time Ts. Notably, the null state time can be broken down into two or more time portions where current is not flowing during the sampling time period Ts. The null time can occur between vector states V1 and V2.

The values T1 and T2 can be determined according to the following equations:

$$V1T1 + V2T2 + VoTo = VrefTs \quad \text{(Eq. 1)}$$

On the horizontal axis (Vα axis):

$$V_{ref}T_s.\cos\theta = V_1T_1 + V_2T_2.\cos\left(\frac{\pi}{3}\right) \quad \text{(Eq. 2)}$$

$$V_{ref}T_s.\sin\theta = V_2T_2.\sin\left(\frac{\pi}{3}\right) \quad \text{(Eq. 3)}$$

Where Ts is 1 per unit:

$$T_2 = \frac{V_s.\sin\theta}{\sin(60)} \quad \text{(Eq. 4)}$$

$$T_1 = \frac{V_s.\sin\left(\frac{\pi}{3} - \theta\right)}{\sin\left(\frac{\pi}{3}\right)} \quad \text{(Eq. 5)}$$

This can be further generalized for all sectors k as:

$$T_1 = \frac{V_s.\sin\left(\frac{k*\pi}{3} - \theta\right)}{\sin\left(\frac{\pi}{3}\right)} \quad \text{(Eq. 6)}$$

$$T_2 = \frac{V_s \cdot \sin(\theta - (k-1) * \frac{\pi}{3})}{\sin(\frac{\pi}{3})}$$

(Eq. 7)

A voltage offset can be calculated as:

$$V_{offset} = (-1)^K \times \frac{(T_1 - T_2)}{CV_S^2}$$

(Eq. 8)

The value of constant C can be determined to reduce THD at the output of the inverter. This may be derived experimentally by testing multiple values. As one example, THD may be reduced where the constant C is set to a value of 2.5. Other values can be used as determined through analysis and testing depending on component and configuration selection.

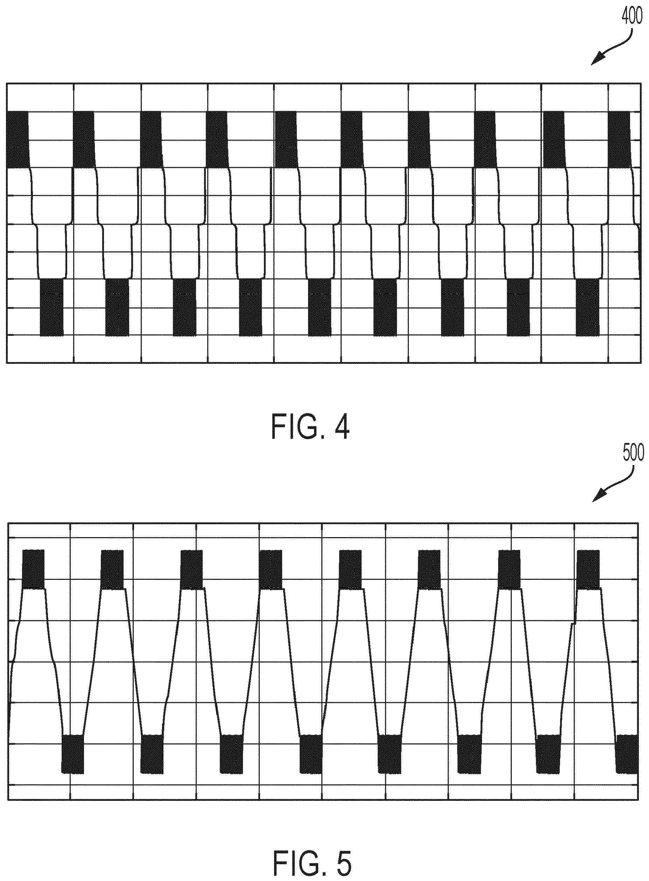

FIG. 4 is an example of a three-level output voltage 400 according to a non-limiting embodiment. FIG. 5 is an example of a four-level output voltage 500 according to a non-limiting embodiment. The examples of FIGS. 4 and 5 illustrate how the space vector PWM control can result in output sinusoids with multiple output levels.

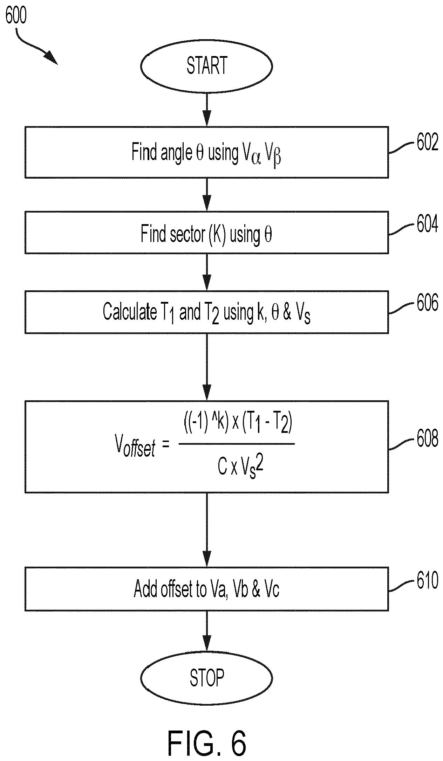

FIG. 6 depicts a process flow 600 according to a non-limiting embodiment. Although depicted in a particular order, it will be understood that the steps of process flow 600 can be done in an alternate order and steps may be added or further subdivided. Process flow 600 is described in references to the controller 130 of FIG. 1; however, other controller configurations can also perform the process flow 600. Steps of the process flow 600 can be performed by the processing system 132 executing instructions stored in memory system 134 and/or may be implemented in hardware.

At block 602, the controller 130 can determine a reference voltage angle θ based on a first voltage and a second voltage that are orthogonal components (e.g., Vα, Vβ) of a reference voltage Vref (also referred to as Vs).

At block 604, the controller 130 can determine a sector K of a space vector map 200 of the reference voltage Vref based on the reference voltage angle θ.

At block 606, the controller 130 can determine an active time pair (T1, T2) of vector states V1, V2 associated with on-off states of the switching elements 108 to modulate between based on the sector K and the reference voltage angle θ. For example, this can be performed according to equations 6 and 7.

At block 608, the controller 130 can determine an offset voltage Voffset based on the sector K, the active time pair (T1, T2), and the reference voltage Vref. For example, this can be performed according to equation 8.

At block 610, the controller 130 can output a carrier waveform for each of the three phases to control modulation of the switching elements 108 to achieve the reference voltage Vref for the three phases. The carrier waveforms Va, Vb, Vc can be sinusoids having a peak determined by a modulation index that can be a configurable parameter, for instance between about 0.8 and 1.1. The offset voltage Voffset can be added to the carrier waveforms Va, Vb, Vc for each of the three phases, and the resulting signals can be sent to a PWM that converts the carrier waveforms into timing signals for the switching elements 108 using known techniques.

According to some aspects, the inverter of the inverter system 100 can be a three-phase multi-level neutral point clamped inverter. The switching elements 108 can include a first pair of switching elements 108 on a high side of each of the three phases and a second pair of switching elements 108 on a low side of each of the three phases. In some aspects, the switching elements 108 can be distributed to produce four or more levels of three phases, and the vector states V1, V2 of the active time pair T1, T2 are separated by 60 degrees with respect to a reference frame defined by the first voltage Vα and the second voltage Vβ. According to some aspects, a sampling period Ts to generate the reference voltage Vref can include a combined time of the active time pair T1, T2 and one or more time portions T0 of null states V0. A modulation index of the inverter can be adjustable to modify total harmonic distortion with overmodulation.

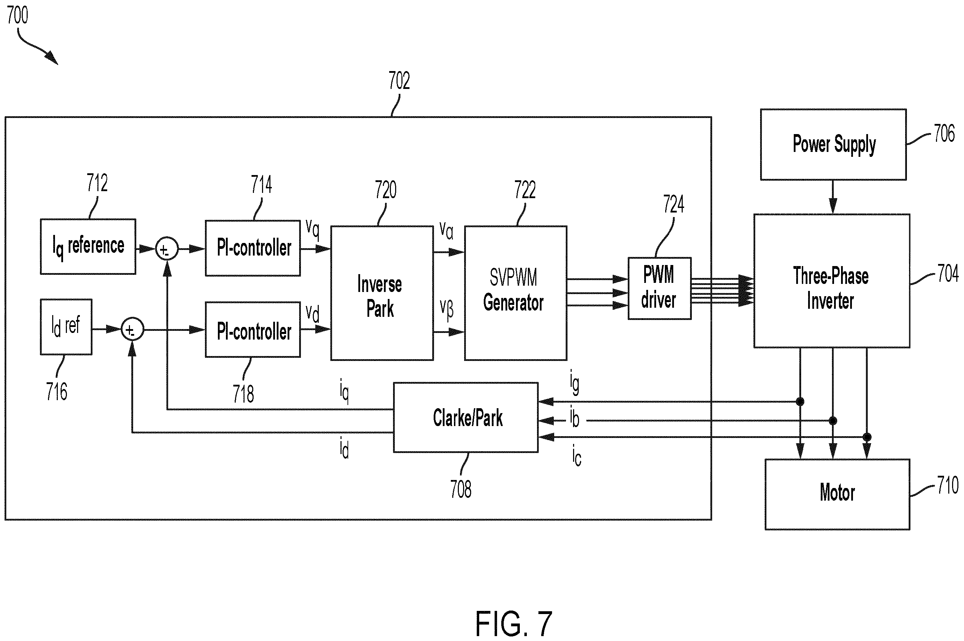

FIG. 7 is a schematic diagram of a motor control system 700 according to a non-limiting embodiment. The motor control system 700 can include a controller 702 that generates gate drive pulses to a three-phase inverter 704 powered by a power supply 706 (e.g., DC power supply 101). A Clarke/Park transform 708 can use a known technique to sample currents ia, ib, ic output by the three-phase inverter 704 and used to control commutation of a motor 710. The Clarke/Park transform 708 convert the current signals ia, ib, ic to a two-dimensional reference frame as id (direct) and iq (quadrature) currents. An Iq reference value 712 can be a quadrature command that leads a direct command by 90 degrees for a greatest torque output by the motor 710. A first proportional-integrating (PI) controller 714 can receive a difference signal between the Iq reference value 712 and iq and produce a Vq output as a quadrature voltage. A second PI controller 718 can receive a difference signal between the Id reference value 716 and id and produce a Vd output as a direct voltage. An inverse Park transform 720 can convert the reference frame of Vd and Vq to Vα and Vβ using known techniques. The Vα and Vβ outputs of the inverse Park transform 720 can be used by an space vector PWM generator 722 to generate the offset voltage Voffset, which is added to sinusoidal waveforms Va, Vb, Vc generated in the controller 702, to produce modified modulating signals using, for example, the process flow 600. A PWM driver 724 can convert these modified modulating signals encoded with carrier waveforms to the separate pulses to send to each of the switching elements 108 of FIG. 1, where the three-phase inverter 704 is an embodiment of the three-phase multi-level neutral point clamped inverter of the inverter system 100, and the controller 702 is an example of the controller 130. The PWM driver 724 pulse conversion can use known techniques to compare incoming modulating signals with high frequency triangular carrier signals to generate PWM for the respective switching elements 108. Notably, the configuration of the motor control system 700 omits an inverse Clarke transform block that would typically be included in classical motor control designs. Further, controllers 714, 718 are not limited to PI controls but can use alternate methods to produce direct and quadrature voltage commands.

The terms "about" and "substantially" are intended to include the degree of error associated with measurement of the particular quantity based upon the equipment available at the time of filing the application. For example, "about" or "substantially" can include a range of $\pm$ 8% or 5%, or 2% of a given value. The terminology used herein is for the purpose of describing particular embodiments only and is not intended to be limiting of the present disclosure. As used herein, the singular forms "a," "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present disclosure has been described with reference to an exemplary embodiment or embodiments, it will be understood by those skilled in the art that various changes may be made, and equivalents may be substituted for elements thereof without departing from the scope of the present disclosure. In addition, many modifications may be made to adapt a particular situation or material to the teachings of the present disclosure without departing from the essential scope thereof. Therefore, it is intended that the present disclosure is not limited to the particular embodiment disclosed as the best mode contemplated for carrying out this present disclosure, but that the present disclosure will include all embodiments falling within the scope of the claims.

**Claims**

1.  An inverter system (100) comprising:

    an inverter comprising a plurality of switching elements (108) arranged with at least three levels, wherein the inverter is configured to receive a direct current input and output an alternating current to three phases; and
    a controller (130) configured to:

    determine a reference voltage angle based on a first voltage and a second voltage comprising orthogonal components of a reference voltage;
    determine a sector of a space vector map of the reference voltage based on the reference voltage angle;
    determine an active time pair of vector states associated with on-off states of the switching elements to modulate between based on the sector and the reference voltage angle; and
    output a carrier waveform for each of the three phases to control modulation of the switching elements to achieve the reference voltage for the three phases.

2.  The inverter system of claim 1, wherein the inverter is a three-phase multi-level neutral point clamped inverter.

3.  The inverter system of claim 1 or 2, wherein the controller (130) is configured to determine an offset voltage based on the sector, the active time pair, and the reference voltage, and preferably wherein the controller (130) is configured to add the voltage offset to the carrier waveform for each of the three phases.

4.  The inverter system of any preceding claim, wherein the switching elements (108) comprise a first pair of switching elements (108a) on a high side of each of the three phases and a second pair of switching elements (108b) on a low side of each of the three phases.

5. The inverter system of any preceding claim, wherein the switching elements (108) are distributed to produce four or more levels of three phases, and the vector states of the active time pair are separated by 60 degrees with respect to a reference frame defined by the first voltage and the second voltage.

6. The inverter system of any preceding claim, wherein a sampling period to generate the reference voltage comprises a combined time of the active time pair and one or more time portions of null states.

7. The inverter system of any preceding claim, wherein a modulation index of the inverter is adjustable to modify total harmonic distortion with overmodulation.

8. The inverter system of any preceding claim, wherein modulation of the switching elements (108) controls commutation of a motor, and preferably wherein the first voltage and the second voltage are inverse Park transform voltages to control the motor.

9. A method of inverter control comprising:

   determining a reference voltage angle based on a first voltage and a second voltage comprising orthogonal components of a reference voltage;
   determining a sector of a space vector map of the reference voltage based on the reference voltage angle;
   determining an active time pair of vector states associated with on-off states of a plurality of switching elements of an inverter to modulate between based on the sector and the reference voltage angle, wherein the switching elements are arranged with at least three levels, and wherein the inverter is configured to receive a direct current input and output an alternating current to three phases; and
   outputting a carrier waveform for each of the three phases to control modulation of the switching elements to achieve the reference voltage for the three phases.

10. The method of claim 9, wherein the inverter is a three-phase multi-level neutral point clamped inverter.

11. The method of claim 9 or 10, further comprising:
    determining an offset voltage based on the sector, the active time pair, and the reference voltage, and preferably further comprising:
    adding the voltage offset to the carrier waveform for each of the three phases.

12. The method of any of claims 9-11, wherein the switching elements comprise a first pair of switching elements on a high side of each of the three phases and a second pair of switching elements on a low side of each of the three phases; and/or
    wherein the switching elements are distributed to produce four or more levels of three phases, and the vector states of the active time pair are separated by 60 degrees with respect to a reference frame defined by the first voltage and the second voltage.

13. The method of any of claims 9-12, wherein a sampling period to generate the reference voltage comprises a combined time of the active time pair and one or more time portions of null states.

14. The method of any of claims 9-13, wherein a modulation index of the inverter is adjustable to modify total harmonic distortion with overmodulation.

15. The method of any of claims 9-14, wherein modulation of the switching elements controls commutation of a motor, and preferably wherein the first voltage and the second voltage are inverse Park transform voltages to control the motor.

FIG. 1

EP 4 395 153 A1

FIG. 2

EP 4 395 153 A1

FIG. 3

FIG. 4

FIG. 5

600

START

Find angle θ using $V_\alpha$ $V_\beta$ — 602

Find sector (K) using θ — 604

Calculate $T_1$ and $T_2$ using k, θ & $V_S$ — 606

$$V_{offset} = \frac{((-1)^{\wedge}k) \times (T_1 - T_2)}{C \times V_S^2}$$ — 608

Add offset to Va, Vb & Vc — 610

STOP

FIG. 6

FIG. 7

EP 4 395 153 A1

Europäisches
Patentamt

European
Patent Office

Office européen
des brevets

## EUROPEAN SEARCH REPORT

Application Number

EP 23 21 2277

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | MCGRATH B P ET AL: "Optimised space vector switching sequences for multilevel inverters", APEC 2001. 16TH. ANNUAL IEEE APPLIED POWER ELECTRONICS CONFERENCE AND EXPOSITION. ANAHEIM, CA, MARCH 4 - 8, 2001; [ANNUAL APPLIED POWER ELECTRONICS CONFERENCE], NEW YORK, NY : IEEE, US, vol. 2, 4 March 2001 (2001-03-04), pages 1123-1129, XP010536132, DOI: 10.1109/APEC.2001.912507 ISBN: 978-0-7803-6618-3 * Section III. PROPOSED NEUTRAL POINT VOLTAGE BALANCING SCHEME; Section V. DISCONTINUOUS MODULATION; Section VI. SIMULATION AND EXPERIMENTAL RESULTS, Equations 1, 5, 6.; figures 1-3,6,7-10,15-17; table I * | 1-15 | INV. H02M7/487 H02M7/5395 H02M7/5387 H02M1/00 H02P27/14 |
| X | YOON-HYUK KO ET AL: "A simple space vector PWM scheme with neutral point balancing for three-level neutral point clamped inverter", INDUSTRY APPLICATIONS SOCIETY ANNUAL MEETING (IAS), 2011 IEEE, IEEE, 9 October 2011 (2011-10-09), pages 1-6, XP032068959, DOI: 10.1109/IAS.2011.6074330 ISBN: 978-1-4244-9498-9 * Section III. PROPOSED NEUTRAL POINT VOLTAGE BALANCING SCHEME; Equations 1; figures 1,6 * | 1-6,9-13 | |
| X | CN 111 525 825 A (INST ELECTRICAL ENG CAS) 11 August 2020 (2020-08-11) * abstract; figures 1-3 * | 1-6,9-13 | TECHNICAL FIELDS SEARCHED (IPC) H02M H02P |

-/--

The present search report has been drawn up for all claims

| Place of search | Date of completion of the search | Examiner |
|---|---|---|
| The Hague | 26 April 2024 | Kanelis, Konstantin |

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2022/226990 A1 (HUAWEI DIGITAL POWER TECH CO LTD [CN]) 3 November 2022 (2022-11-03) * paragraphs [0079], [0103], [0112]; figures 3, 5, 7-14 * ----- | 1,8,9,15 | |

**TECHNICAL FIELDS SEARCHED (IPC)**

The present search report has been drawn up for all claims

| Place of search | Date of completion of the search | Examiner |
|---|---|---|
| The Hague | 26 April 2024 | Kanelis, Konstantin |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
...........................................................................................
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 23 21 2277

This annex lists the patent family members relating to the patent documents cited in the above-mentioned European search report.
The members are as contained in the European Patent Office EDP file on
The European Patent Office is in no way liable for these particulars which are merely given for the purpose of information.

26-04-2024

| Patent document cited in search report | | Publication date | Patent family member(s) | | Publication date |
|---|---|---|---|---|---|
| CN 111525825 | A | 11-08-2020 | NONE | | |
| WO 2022226990 | A1 | 03-11-2022 | CN | 116686208 A | 01-09-2023 |
| | | | EP | 4322359 A1 | 14-02-2024 |
| | | | US | 2024063747 A1 | 22-02-2024 |
| | | | WO | 2022226990 A1 | 03-11-2022 |

EPO FORM P0459

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- IN 202211073638